# EUROPÄISCHE PATENTANMELDUNG

(11) **EP 0 824 155 A1**
(43) Veröffentlichungstag der Anmeldung: **18.02.1998**
(21) Anmeldenummer: 97113285.7
(22) Anmeldetag: 01.08.1997
(51) Int. Cl.: D06P 1/52, D06P 1/647, D06P 5/08, C08K 5/17

(54) **Wässrige, konzentrierte Polycarbonsäurenatriumsalz-Lösungen, deren Herstellung und Verwendung**

(30) Priorität: 15.08.1996 EP 96810544
(71) Anmelder: Clariant Finance (BVI) Limited, Road Town, Tortola (VG)
(72) Erfinder: Danner, Bernard, 68400 Riedisheim (FR); Palacin, Francis, 68400 Riedisheim (FR)
(74) Vertreter: D'haemer, Jan Constant

(57) **Zusammenfassung**

Wäßrige, homogene, 20 bis 60 %-ige Lösungen (L) von Mischungen aus
(A) Copolymerisaten von
   (x) (Meth)acrylsäure
      mit
   (y) Maleinsäure oder Maleinsäureanhydrid
   im Molverhältnis (x)/(y) = 0,7/1 bis 7/1, mit einem durchschnittlichen Molekulargewicht M_{w} im Bereich von 500 bis 500'000, als freie Säuren und/oder Natriumsalze
   und
(B) Nitrilotriessigsäure als freie Säure und/oder Natriumsalz,
wobei das Gewichtsverhältnis (A)/(B) im Bereich von 1/1 bis 1/10 liegt, mindestens 25 % der gesamten Carboxygruppen als Natriumsalze vorliegen und der pH von (L) im Bereich von 5 bis 11 liegt, eignen sich als Hilfsmittel für die Behandlung von Fasermaterial, insbesondere als Auswaschmittel für Färbungen von hydrophilem Fasermaterial.

## Beschreibung

Bei der Verarbeitung von hydrophilem Fasermaterial, insbesondere von Textilmaterial, werden in verschiedenen Verarbeitungsstufen (Vorbehandeln, Färben, Nachbehandeln) die jeweils geeigneten Hilfsmittel eingesetzt, z.B. zum Entschlichten, beim Färben, zum Dispergieren bestimmter Farbstoffe oder für das Auswaschen von Färbungen. Eine beliebte Kategorie von Hilfsmitteln für die genannten Verarbeitungsstufen sind Polycarbonsäuren, z.B. (Meth)acrylsäurecopolymere, vornehmlich solche die einpolymerisierte Maleinsäuremonomereinheiten enthalten, und/oder Aminopolycarbonsäuren. Aus der EP-A 0101567 sind konzentrierte, wäßrige, homogene, 25 bis 60 Gew.-%-ige, einen pH-Wert von 3 bis 7 aufweisende Lösungen von Mischungen aus
a) Homopolymerisaten der Acrylsäure und/oder Copolymerisaten der Acrylsäure mit bis zu 50 Gew.-% Maleinsäure und/oder Maleinsäureanhydrid und K-Werten von 10 bis 25
   und
b) Nitrilotriessigsäure, Polyaminopolycarbonsäuren, Polyaminopolyphosphonsäuren und/oder Hydroxyalkanpolyphosphonsäuren,
   wobei die gelösten Komponenten vollständig oder zumindest zu 20 % in Form der Kaliumsalze und, in letzterem Fall, der Rest in Form der freien Säure vorliegen,
und ihre Verwendung in Vorbehandlungs- oder Färbebädern für aus Cellulose bestehendes oder Cellulose enthaltendes Textilgut als kombiniertes Dispergier- und Metallionenkomplexbildungsmittel
bekannt.

Die in der EP-A 0101567 definierte Erfindung basiert auf der Feststellung, daß es nicht möglich ist, Mischungen der Natriumsalze in Wasser gemeinsam in der gewünschten Konzentration (gemeint ist 25 bis 60 %-ig) zu lösen, da beide Komponenten einander bei diesen Konzentrationen aussalzen und höchstens 10 %-ige Lösungen dann beständig sind. Aus dieser Feststellung heraus wurden die im Vergleich teureren und schwereren Kaliumsalze hergestellt, welche die dort beschriebenen Beständigkeiten aufweisen, wobei eine bestimmte Unverträglichkeit mit anderen polymeren Tensiden, wie Alkylphenoläthoxylaten, in Kauf genommen wird.

In der Technik ist es allerdings erwünscht, möglichst wirtschaftliche Produkte einzusetzen, die auch nicht das Hindernis bestimmter Unverträglichkeiten mit Komponenten, die in den Verfahren vorkommen können, aufweisen, da solche Unverträglichkeiten z.B. Unterbrüche und/oder Abänderungen vorprogrammierter Verfahren mit sich bringen oder, gegebenenfalls, die Durchführung mancher Behandlungsverfahren sogar unmöglich machen.

Es wurde nun überraschenderweise gefunden, daß die unten beschriebenen Copolymeren von (Meth)acrylsäure und Maleinsäure oder Maleinsäureanhydrid zusammen mit Nitrilotriessigsäure, in den angegebenen Mengenbereichen und in der angegebenen Natriumsalzform, konzentrierte Lösungen wie unten definiert, überraschend guter Beständigkeit ergeben, ohne daß es notwendig sei die Kaliumsalze herzustellen.

Die Erfindung betrifft die unten definierten konzentrierten Lösungen (L), deren Herstellung und deren Verwendung.

Ein erster Gegenstand der Erfindung sind also wäßrige, homogene, 20 bis 60 %-ige Lösungen (L) von Mischungen aus
(A) Copolymerisaten von
   (x) (Meth)acrylsäure
      mit
   (y) Maleinsäure oder Maleinsäureanhydrid
   im Molverhältnis (x)/(y) = 0,7/1 bis 7/1, mit einem durchschnittlichen Molekulargewicht M_{w} im Bereich von 500 bis 500'000, als freie Säuren und/oder Natriumsalze
   und
(B) Nitrilotriessigsäure als freie Säure und/oder Natriumsalz,
wobei das Gewichtsverhältnis (A)/(B) im Bereich von 1/1 bis 1/10 liegt, mindestens 25 % der gesamten Carboxygruppen als Natriumsalze vorliegen und der pH von (L) im Bereich von 5 bis 11 liegt.

Die Copolymerisate (A) enthalten die einpolymerisierten (Meth)acrylsäuremonomereinheiten und Maleinsäuremonomereinheiten im angegebenen Molverhältnis (x)/(y). Vorteilhaft liegt das Molverhältnis (x)/(y) im Bereich von 1/1 bis 6/1, vorzugsweise 2/1 bis 5/1, wobei eine besondere Kategorie von Copolymerisaten (A) durch diejenigen dargestellt ist, in welchen das Molverhältnis (x)/(y) < 3,6/1 ist. Das durchschnittliche Molekulargewicht (Gewichtsdurchschnitt) M_{w} von (A) liegt vorteilhaft im Bereich von 1000 bis 200'000, insbesondere 1200 bis 50'000, gemessen gegen Polyacrylsäurestandards.

Die Copolymeren (A) können auf an sich bekannte Weise oder analog zu bekannten Methoden hergestellt werden durch Copolymerisation der genannten Monomeren im angegebenen Molverhältnis, vorteilhaft in wäßriger Lösung. Vorteilhaft wird ein Polymerisationskatalysator oder ein Gemisch von Polymerisationskatalysatoren eingesetzt, vornehmlich Peroxyverbindungen, beispielsweise Natrium- oder Kaliumpersulfat, Benzoylperoxyd, Wasserstoffperoxyd oder ein entsprechendes Alkalimetallperoxyd, z.B. Natrium- oder Kaliumperoxyd, beispielsweise ≤ 0,2 Mol Katalysator, vorteilhaft 0,002 bis 0,1 Mol Katalysator, pro Mol Monomer. Die Polymerisation erfolgt vorteilhaft bei pH-Werten im Bereich von 0,1 bis 10, vorzugsweise 1 bis 6, wobei der pH zweckmäßig mit Natriumhydroxyd eingestellt wird, so daß das Polymerisationsprodukt in Form von (Teil)natriumsalz entsteht. Das Molekulargewicht des Polymerisates kann durch geeignete Wahl der Menge Katalysator und/oder durch Verwendung von Polymerisationsreglern gesteuert werden. Es eignen sich im allgemeinen an sich bekannte Polymerisationsregler, z.B. Salze mehrwertiger Metalle, gegebenenfalls in Kombination mit Alkalimetall und/oder Ammonium, mit starken Mineralsäuren, z.B. Eisen-, Kupfer- oder Mangansulfate, Eisen-, Kupfer- oder Calciumchloride, Eisen-, Kupfer-, Calcium- oder Manganphosphate. Die Polymerisation erfolgt vorteilhaft im Temperaturbereich von 60 bis 130°C, vorzugsweise 80 bis 100°C.

Die erfindungsgemäßen Lösungen (L) können durch einfaches Mischen der jeweiligen wäßrigen Lösungen der Komponenten (A) und (B) in der jeweiligen Konzentration und erforderlichenfalls pH-Einstellung mit NaOH-Lösung oder einer Säure (z.B. einer starken Mineralsäure oder Carbonsäure) hergestellt werden.

Nach einer bevorzugten Verfahrensweise wird die Konzentration der Monomeren und der weiteren Komponenten im Polymerisationsreaktionsgemisch so gewählt, daß durch Zugabe der Komponente (B), z.B. in Form von konzentrierter Lösung, direkt die Lösung (L) entsteht.

Die Nitrilotriessigsäure wird vorteilhaft in Form von Natriumsalz, z.B. Di- oder Trinatriumsalz, und als konzentrierte Lösung, z.B. 20 bis 60 %-ige Lösung, oder auch in fester Form (z.B. 90 bis 100 %-ig - wobei der Rest auf 100 %, d.h. 0 bis 10 %, Kristallwasser und/oder Kristallfeuchtigkeit ist) eingesetzt.

Das Gewichtsverhältnis (A)/(B) liegt vorteilhaft im Bereich von 1/1,2 bis 1/6, vorzugsweise 1/2 bis 1/5, wobei die Komponente (A) als freie Säure und die Komponente (B) als Trinatriumsalz berechnet sind. Besonders hervorzuheben sind diejenigen Lösungen (L), worin das Gewichtsverhältnis (A)/(B) < 1/2 ist.

Der pH der erfindungsgemäßen Lösungen (L) liegt vorteilhaft im Bereich von 6 bis 10, besonders bevorzugt 8 bis 10. Der pH wird vorteilhaft durch Zugabe von Natriumhydroxydlösung entweder bei der Polymerisation oder, wenn ein Copolymerisat in Säureform eingesetzt wird, vor, während oder nach dem Beimischen der Komponente (B) eingestellt, falls erforderlich (je nach gewünschtem pH). Bei pH-Werten im sauren Bereich und bei entsprechend hohen Anteilen an Komponente (B) kann es u.U. ausreichen, die Komponente (B) als Trinatriumsalz zuzugeben. Vorteilhaft wird allerdings der pH mit Natronlauge auf die oben angegebenen bevorzugten Bereiche eingestellt. Vorteilhaft sind mindestens 50 % der gesamten Carboxygruppen in Natriumsalzform, vorzugsweise mindestens 70 %, insbesondere 75 bis 95 % davon.

### Gewünschtenfalls kann den Lösungen (L)

(Z) ein Verrottungsschutzmittel (z.B. ein Fungizid)
zugegeben werden, beispielsweise in Konzentrationen von 0,0001 bis 0,1 Gew.-%, vorzugsweise 0,005 bis 0,05 Gew.-% (Z), bezogen auf (L).

Die erfindungsgemäßen Lösungen (L) sind im allgemeinen beständig gegen Hitze- und Frosteinwirkung und zeichnen sich auch durch ihre gute Lager- und Transportbeständigkeit aus. Sie sind flüssig und gut dosierbar und können direkt zum Gebrauch eingesetzt werden.

Die erfindungsgemäßen konzentrierten Lösungen (L) finden ihre Verwendung in all den Bereichen der Faserbehandlung, in welchen (Meth)acrylsäurepolymerisate in Natriumsalzform einsetzbar sind, insbesondere in Kombination mit (B), z.B. in der textilen Vorbehandlung zum Entschlichten von Cellulosetextilmaterial, oder als Dispergiermittel für Farbstoffe (z.B. in Färbeverfahren und/oder für Pigmente und/oder Dispersionsfarbstoffe) oder, beim Färben, als Komplexiermittel für härtebildende Kationen, vor allem aber als Auswaschmittel für Färbungen von hydrophilem Fasermaterial zum Zwecke der Entfernung von nicht fixiertem Farbstoff vom gefärbten Substrat.

Das faserige Substrat kann in einer beliebigen Bearbeitungsform vorliegen, wie sie als gefärbtes Material zum Auswaschen des nichtfixierten Teils der Färbung vorliegen kann, z.B. als Fäden, Garnstränge, Spulen, Gewebe, Gewirke, Faservliese, Tuftingware oder Halbfertig- oder Fertigware. Das Fasermaterial ist im allgemeinen hydrophiles Material, wie es z.B. mit nicht-ionischen oder/und anionischen Farbstoffen gefärbt wird, z.B. Polyamidfasermaterial (vornehmlich Wolle) oder Cellulose (z.B. Baumwolle, Hanf, Leinen oder Viskoserayon). Besonders hervorzuheben sind Cellulosetextilmaterialien die mit Reaktivfarbstoffen oder Schwefelfarbstoffen gefärbt worden sind.

Die auszuwaschenden Färbungen können Ausziehfärbungen sein oder auch imprägnierte Ware, z.B. Klotzfärbungen (z.B. nach Continue-Verfahren hergestellt) oder auch Drucke.

Bei Färbungen mit Schwefelfarbstoffen wird im allgemeinen der Schwefelfarbstoff in Gegenwart von Alkali in die entsprechende Leukoform reduziert, welche dann als Alkalithiolat in der Flotte löslich ist und in dieser gelösten Form auf die Ware appliziert wird; nach der Färbung wird die Leukoform des Farbstoffes auf dem Substrat durch Oxydation, z.B. durch Belüften und/oder Behandeln mit einem gelösten Oxydationsmittel (z.B. Wasserstoffperoxyd), in die Schwefelfarbstoff-Form übergeführt (rückoxydiert). Die Flotte ist im allgemeinen alkalisch.

Für das Färben mit Reaktivfarbstoffen, insbesondere denjenigen welche halogensubstituierte Heteroringe enthalten (vornehmlich Pyrimidinringe oder Triazinringe), wird auch im alkalischen Medium gefärbt, wobei im allgemeinen zusätzliche Elektrolyte dem Färbebad oder der Imprägnierflotte zugegeben werden.

Die Färbungen können vor dem Auswaschen gespült werden, wobei eine Neutralisation der auszuwaschenden Ware vor der Zugabe von (L) nicht nötig ist.

Es ist zwar auch möglich die Lösungen (L) zum Auswaschen mit anderen Auswaschmitteln zu kombinieren, z.B. mit tensiden Waschmitteln; vorteilhaft werden allerdings die Lösungen (L) als alleinige Auswaschmittel, ohne tenside Zusätze verwendet. Zum Auswaschen werden vorteilhaft solche Mengen an (L) eingesetzt, die einer Konzentration an (A) + (B) im Bereich von 0,05 bis 5 g/l, vorzugsweise 0,1 bis 2 g/l, entsprechen. Das Flottenverhältnis vom Substrat zur (L)-haltigen Flotte liegt z.B. im Bereich von 1:3 bis 1:40, vorzugsweise 1:5 bis 1:25. Die erfindungsgemäße Nachbehandlung mit (L) erfolgt vorteilhaft bei pH-Werten im Bereich von 4 bis 13, vorzugsweise im basischen Bereich, insbesondere im pH-Bereich von 8 bis 12. Der pH kann erforderlichenfalls mit üblichen Basen eingestellt werden, z.B. mit Natriumhydroxyd oder vorzugsweise Natriumcarbonat. Die erfindungsgemäße Nachbehandlung mit (L) erfolgt vorteilhaft bei erhöhter Temperatur, z.B. bei Temperaturen ≥ 60°C, vorzugsweise im Temperaturbereich von 80°C bis Kochtemperatur. Besonders vorteilhaft wird bei Kochtemperatur ausgewaschen. Die ausgewaschene Ware läßt sich sehr leicht und gut mit Wasser ausspülen und es werden Färbungen optimaler Echtheiten (besonders Naß- und Reibechtheiten) erhalten.

In den folgenden Beispielen bedeuten die Teile Gewichtsteile und die Prozente Gewichtsprozente; die Temperaturen sind in Celsiusgraden angegeben. In den Applikationsbeispielen beziehen sich die Prozente, wenn nicht anders angegeben, aufdas Substrat; C.I. steht für Colour Index.

### Beispiel 1

95,0 Teile Wasser, entmineralisiert, 57,4 Teile Maleinsäureanhydrid und 0,1 Teile Ammonium/Eisen(III)-sulfat-Dodecahydrat werden auf 95-100°C erhitzt. Sodann werden gleichzeitig 137,2 Teile Natronlauge 30 %-ig, 137,2 Teile Acrylsäure sowie 79,8 Teile einer Lösung von 17,5 Teilen Natriumpersulfat und 7,5 Teilen Wasserstoffperoxyd (35 Gew.-%) in 54,8 Teilen Wasser regelmäßig, innerhalb von 5 Stunden, bei 95-100°C zugetropft. Sodann wird noch während 1 Stunde bei 95-100°C ausreagieren gelassen, auf Raumtemperatur abgekühlt und nach der Zugabe von 66,8 Teilen 30 %-iger Natronlauge, 1675,0 Teilen einer 40 %-igen wäßrigen Lösung von Nitrilotriessigsäuretrinatriumsalz und 255,0 Teilen entmineralisiertem Wasser, ausgeladen. Das so hergestellte Präparat ist ein Lösung und weist einen pH-Wert von 9,0 ± 0,3 auf.

### Beispiel 2

Man verfährt wie im Beispiel 1 beschrieben, mit dem Unterschied, daß 65,2 Teile Maleinsäureanhydrid und 125,7 Teile Acrylsäure eingesetzt werden. Das so hergestellte Präparat ist eine Lösung und weist einen pH-Wert von 9,0 ± 0,3 auf.

### Beispiel 3

Man verfährt wie im Beispiel 1 beschrieben, mit dem Unterschied, daß 49,6 Teile Maleinsäureanhydrid und 148,7 Teile Acrylsäure eingesetzt werden. Das so hergestellte Präparat ist eine Lösung und weist einen pH-Wert von 9,0 ± 0,3 auf.

### Beispiel 4

Man verfährt wie im Beispiel 1 beschrieben, mit dem Unterschied, daß 204,0 Teile 30 %-iger Natronlauge zusammen mit der Acrylsäure zudosiert werden, und nach der Polymerisation keine Natronlauge mehr zugegeben wird. Das so hergestellte Präparat ist eine Lösung und weist einen pH-Wert von 9,0 ± 0,3 auf.

### Applikationsbeispiel A

Eine mit 4 % C.I. Reactive Blue 79 auf Baumwolltrikot erzeugte Ausziehfärbung wird unmittelbar nach dem Färben wie folgt nachbehandelt: Es wird erst bei 60°C, dann kalt gespült und darauf kochend mit 1g/l des Präparates gemäß Beispiel 1 bei einem Flottenverhältnis von 1:20 behandelt. Dann wird nochmals bei 60°C und dann kalt gespült und schließlich getrocknet. Die Ware wird in jedem Spülbad 10 Minuten lang bei einem Flottenverhältnis von 1:20 belassen. Man erhält eine dunkle, marineblaue Färbung mit guter Waschechtheit.

### Applikationsbeispiele B, C und D

Analog wie das Präparat von Beispiel 1 wird im Applikationsbeispiel A ein jedes der Präparate der Beispiele 2, 3 und 4 eingesetzt. Man erhält ebenfalls eine dunkle marineblaue Färbung mit guter Waschechtheit.

### Applikationsbeispiel E

Eine gespülte und oxydierte Baumwollfärbung aus 5 % C.I. Leuco Sulphur Black 1 (eingesetzt in Form einer 25 %-igen wäßrigen Zubereitung), wird unter den im den Applikationsbeispiel A angegebenen Bedingungen nachbehandelt. Man erhält eine Schwarzfärbung mit einem sehr hohen Waschechtheitsniveau.

### Applikationsbeispiele F, G und H

Analog wie das Präparat von Beispiel 1 wird im Applikationsbeispiel E ein jedes der Präparate der Beispiele 2, 3 und 4 eingesetzt. Man erhält ebenfalls eine Schwarzfärbung mit einem sehr hohen Waschechtheitsniveau.

## Patentansprüche

1. Wäßrige, homogene, 20 bis 60 %-ige Lösungen (L) von Mischungen aus
(A) Copolymerisaten von
(x) (Meth)acrylsäure
mit
(y) Maleinsäure oder Maleinsäureanhydrid
im Molverhältnis (x)/(y) = 0,7/1 bis 7/1, mit einem durchschnittlichen Molekulargewicht M_{w} im Bereich von 500 bis 500'000, als freie Säuren und/oder Natriumsalze
und
(B) Nitrilotriessigsäure als freie Säure und/oder Natriumsalz,
wobei das Gewichtsverhältnis (A)/(B) im Bereich von 1/1 bis 1/10 liegt, mindestens 25 % der gesamten Carboxygruppen als Natriumsalze vorliegen und der pH von (L) im Bereich von 5 bis 11 liegt.

2. Lösungen (L) gemäß Anspruch 1 zusätzlich enthaltend
(Z) ein Verrottungsschutzmittel.

3. Verwendung von (L) gemäß Anspruch 1 oder 2 als Hilfsmittel für die Behandlung von Fasermaterial.

4. Verwendung gemäß Anspruch 3 der Lösungen (L) gemäß Anspruche 1 oder 2 als Auswaschmittel für Färbungen von hydrophilem Fasermaterial.

5. Verwendung gemäß Anspruch 4 als Auswaschmittel für Färbungen auf Cellulose mit Reaktiv- oder Schwefelfarbstoffen.

6. Verwendung gemäß Anspruch 3, 4 oder 5, ohne zugesetzte tenside Waschmittel.
